# EUROPEAN PATENT APPLICATION

(11) **EP 2 098 988 A1**
(43) Date of publication of application: **09.09.2009**
(21) Application number: 08003922.5
(22) Date of filing: 03.03.2008
(51) Int. Cl.: G06T 5/00, H04N 7/24

(54) **Method and device for processing a data stream and system comprising such device**

(71) Applicant: Nokia Siemens Networks Oy, 02610 Espoo (FI)
(72) Inventor: Arsenio, Artur, Queijas 2795 Queijas (PT)
(74) Representative: Bruglachner, Thomas E.

(57) **Abstract**

A method and a device for processing a data stream are provided comprising the steps of (a) identify at least one object within said data stream; and (b) transform said at least one object within said stream. Further, a system comprising such device is suggested.

## Description

The invention relates to a method and to a device for processing a data stream and to a system comprising such a device.

Various methods for data and/or object processing are known, e.g. object and/or face detection and recognition, 3D modeling of objects, deformable contours, multi-feature tracking, head gaze inference estimation, eye detection and eye tracking, image perspective projections.

Furthermore, methods are known to track lips or movements in video contents. In addition, an audio content may be recognized and/or synthesized by known voice processing techniques.

With respect to tagging objects within a video stream, reference is made to video standards like, e.g., MPEG-4, MPEG-7 or H.26x.

A telecommunication provider or operator delivers to its client various services of different qualities, sometimes dependent on the bandwidth available in the respective communication network.

The objective of the approach provided is in particular to enable an operator or application service provider to offer additional applications and/or services to a user that are of high interest for this user and allows a high degree of personalization to adjust the content to his or her individual taste.

This problem is solved according to the features of the independent claims. Further embodiments result from the depending claims.

In order to overcome this problem, a method for processing a data stream is provided comprising the steps:
(a) identify at least one object within said data stream;
(b) transform said at least one object within said stream.

This new approach allows an application service provider (ASP) to provide users with the possibility to adapt and/or configure said data stream, e.g., a TV-broadcast, a video on demand, an on-line or live content to their particular preferences and in particular to further manipulate the content thereof.

This approach in particular relates to content manipulation of data streams comprising in audio and/or video content.

In an embodiment, said data stream is provided in or via a network.

Preferably, such network comprises an IP network. The user connected to such IP network via any access network, comprising, e.g., a digital subscriber line (DSL), a radio access network (RAN), cable network, or the like.

In another embodiment, said data stream comprises video content and/or audio content.

In a further embodiment, prior to step (b) the at least one object is extracted.

Identification of the at least one object may be achieved by detecting a contour of said at least object.

In a next embodiment, the at least one object is transformed by being replaced by at least one predefined object.

It is also an embodiment that said at least one predefined object is selected by a user.

Pursuant to another embodiment, said at least one predefined object comprises at least one 2D-model and/or at least one 3D-model.

According to an embodiment, said at least one predefined object is provided by a object database.

Such at least one predefined object can be, e.g., a face of the user that is modeled according to pictures from different perspectives. Such 3D-model of the user's face can be stored with the object database and then selected by the user in combination with various data streams.

The object database may also supply 3D-models that are artificially built by a computer (simulation). Such animated 3D-models can be calculated, scaled, processed and adapted more easily than a 3D-model of a real person.

According to another embodiment, transformation of the at least one object comprises:
- stretching and/or skewing and/or scaling of the at least one object or a portion thereof;
- impersonating (replacement and/or transformation) of the at least one object or a portion thereof.

In yet another embodiment, at least one object is represented or comprises at least one of the following information, in particular provided as a parameter for the object:
- Information regarding as how the object may be transformed within the data stream or within an image of said data stream;
- Information regarding whether or not the object is transformable;
- Information regarding possibilities of transforming and/or replacing the object if such object is regarded transformable;
- Information regarding a category (or class) of objects, wherein each category provides similar or identical properties to objects associated with said category;
- Information regarding a location of the object, in particular coordinates;
- Information regarding a scaling factor and/or a 3D-orientation of the object;
- Information regarding a contour of the object, in particular a set of 2D-contour points;
- Information regarding occluding objects.

According to a next embodiment, said method is at least partially provided at a customer's premises, in particular in a set-top box.

Pursuant to yet an embodiment, said method is at least partially provided by a network, in particular by at least one network component.

It is an embodiment that at least one object within said data stream can be identified by active object detection and/or by tracking mechanisms.

As another embodiment, the at least one object within said data stream is identified by the data stream itself. Advantageously, said data stream is a data stream comprising object information, in particular an MPEG data stream.

The problem stated above is also solved by a device for processing a data stream comprising a processor unit and/or a hard-wired circuit and/or a logic circuit that is equipped and/or arranged such that the method as described herein is executable thereon.

According to an embodiment, the device is associated with or deployed at a customer's premises. The device may in particular be or be associated with a set-top box.

It is also an embodiment that said device is a network component within a communication network.

Such device may in particular be a server deployed with an application service provider.

The problem stated supra is further solved by a communication system comprising the device as described herein.

Embodiments of the invention are shown and illustrated in the following figures:
- Fig.1: shows an exemplary implementation for a content merging and/or content transformation system;
- Fig.2: shows an different exemplary implementation for a content merging and/or content transformation system that allows recording of a modified video stream at a video on demand content server;
- Fig.3: shows functional components of a movieoke (karamovie, karaoke movie) application enabling a next generation karaoke;
- Fig.4: shows functional components of a configuration module that builds an object model from a sequence of images or it may provide a synthetic or artificial model, which is added to a database of object models;
- Fig.5: shows functional components of a content merging and/or content transformation module comprising an object detection component, an extraction component, a merge objects component, a transform object component and an apply feature component providing a transformed content (video and/or audio data);
- Fig.6: shows a general architecture comprising a home network with a STB/TV, a PC, which are both connected to a home hardware that may comprise (at least a portion of) a content transformation client, wherein said home hardware is connected to an access network that is further connected to an IP network to which a middleware component, a content transformation server, a VoD server, a digital rights management component and a TV-broadcast head end are connected;
- Fig.7: shows a network "impersonate solution", wherein the content merging and/or transformation system is located on a network component;
- Fig.8: depicts a client "impersonate solution" comprising an impersonate interface within a home platform to which a user is connected via a STB/TV;
- Fig.9: shows an exemplary protocol for transmitting an object parameter structure;
- Fig.10: shows a flow diagram visualizing as how at least one object of an image (within a video stream) may be manipulated;
- Fig.11: shows an implementation of a compact representation utilizing predictive coding.

The approach provided in particular comprises a mechanism for transforming an image content of a video (e.g., a video clip and/or a video stream), said image content comprising at least one object, into at least one other object that may in particular be pre-selected by a user of said video.

The at least one other object pre-selected may be chosen from an object database comprising in particular 2D-modles and/or 3D-models.

It is to be noted that the content may also refer to audio and/or video information.

Each object may preferably be represented by a set of parameters, in particular transmission parameters, so that it is comprises not only information about its image, but also information concerning, e.g., how this object may be transformed within the image conveyed.

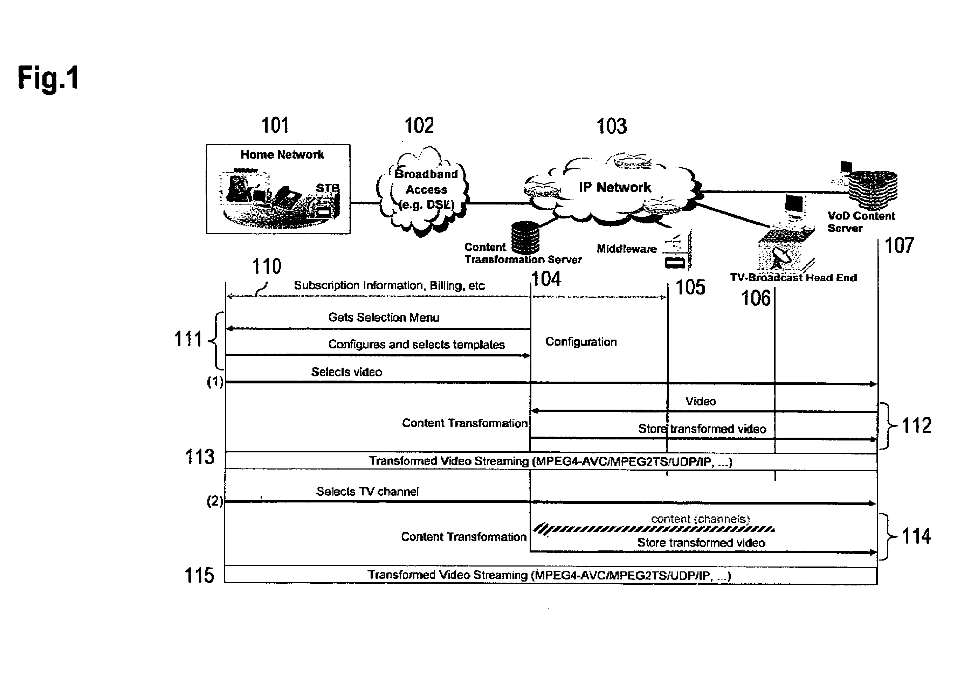

**Fig.1** shows an exemplary implementation for a content merging and/or content transformation system.

A user at a home network 101 is connected via a broadband access 102, e.g., via a Digital Subscriber Line (DSL), to an IP network 103. A content transformation server 104 and a middleware 105 are connected to said IP network 103. Further, a TV-broadcast head end 106 and a Video on Demand (VoD) content server 107 are connected to the IP network 103.

The user utilizing standard interfaces subscribes (see message 110) to a content merging and/or transformation service, thereby selecting options for service package, billing, etc.

Once the service is set up and available, the user is able to utilize a front-end for configuration purposes. Said front-end may be provided by the content transformation server 104. By such means, the user can create and/or store templates (and select them at a later time), or just select templates that are already available (see messages and configuration 111).

With a first task "(1)", the user selects a video from the content available on the VoD server 107 (or a content that is in particular available for this VoD subscriber pursuant to his or her subscription), said video is transferred from the VoD content server 107 to the content transformation server 104. Via said front-end, the user may select, e.g., movie objects or features s/he wants to transform (e.g., to replace an object within the video such as a face or to enlarge said object, etc.), and/or a temporal window for such changes to occur.

The video is then transformed, e.g., selected movie objects or features are replaced by a template (object) selected. The transformed video is stored on the VoD content server 107 and/or additional data for a video is stored as an attachment to a category of contents associated to the original video (see messages and transformation 112).

The video is streamed (indicated by message flow 113) to the user to be watched.

Depending on the user's type of subscription and/or settings chosen, the transformed content may be available to only this particular user or a subset of users or to all users.

As a second task "(2)", the user selects a TV channel to be watched, wherein particular objects or features within the streamed content shall be transformed or changed according to the user's demand. The content (channels) provided by the TV-broadcast head end 106 is conveyed to the content transformation server 104 and transformed according to the user's request. The modified and/or altered content/information is stored with the VoD content server 107 (see messages and content transformation 114).

The transformed video is streamed (see message flow 115) towards the user by the VoD content server 107. Optionally, the modified video could be streamed to the user utilizing different transmission mechanisms.

Hence, the example provided in Fig.1 shows a network solution, wherein a content transformation server 104 processes various transformations, in particular extraction or objects and/or replacement of objects according to at least one user's request.

### Exemplary Scenarios

As an example, an actor in a movie and a set of user photos are considered. By using computer graphics techniques (B-Splines or other deformable contours, image perspective transformations, image correspondence techniques) the movie can be changed dynamically (e.g., online) and adapted according to a user's request: E.g., the actor's face can be replaced by the user's face or by any other people's faces. Furthermore, an artificial and/or animated (cartoon) character head may be used to replace the face (or other objects, in particular of a body) of the original actor within the movie. The set of user photos can be utilized in order to build a model (2D-model or 3D-model) of the user (or, of course, any other person shown on the photo) that is subject for replacement.

With the actor speaking in the movie, so does the user's selection or an (artificially generated) computer animation.

Such a scenario may be applicable to any video content or stream (in particular broadcast television) and utilized to transform any object or person. The software for providing such functionality may be deployed with a home set-top box (STB) or it may be provided within a network component or distributed across several components throughout the network.

Advantageously, a high-grade personalized home entertainment system can thus be provided.

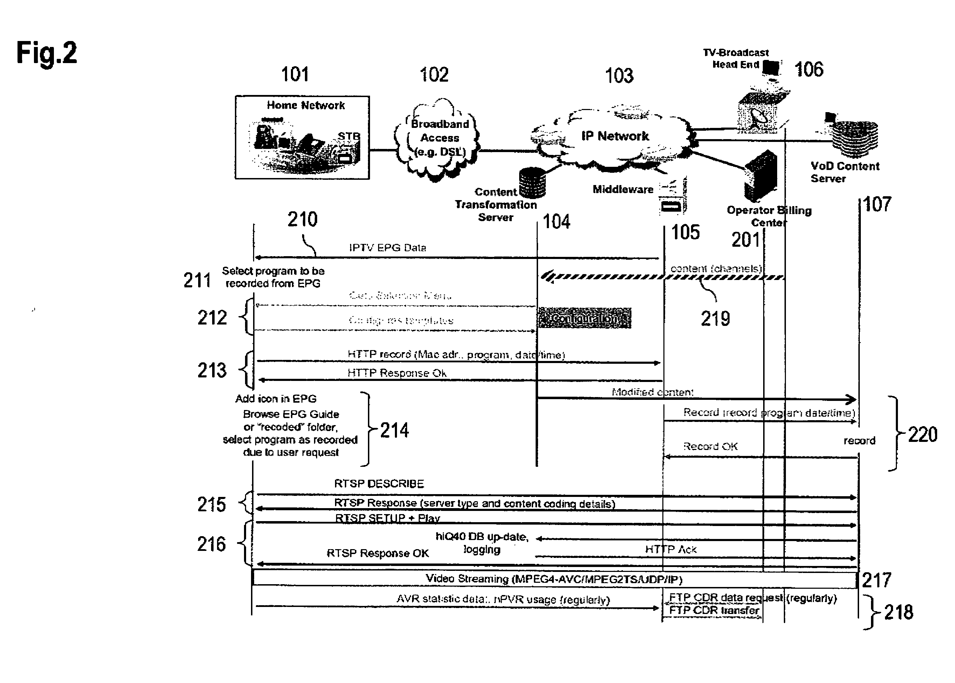

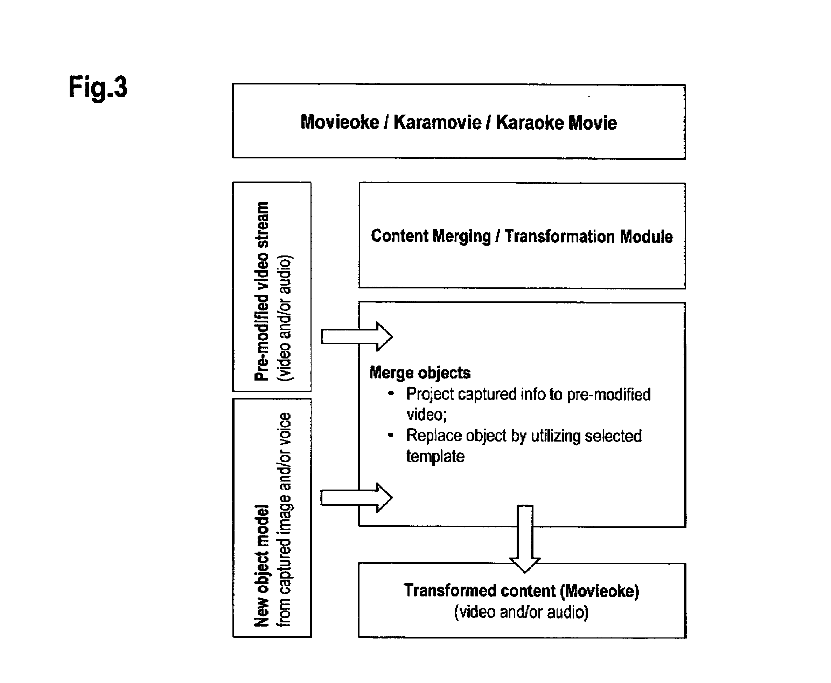

In particular, the following features, applications and/or scenarios may be provided and/or supported:
a. Impersonation:
   An impersonation in particular substitutes a person by another person (or respective portions thereof), e.g., replacing a face of a first person by a face of a different person (or an computer animation).
   Hence, new content can be merged into streamed content, in particular into streamed video content.
   An exemplary scenario for impersonation can be as follows:
      - The user selects the feature (from a set of available features, obtained from face detection, for instance) on a video stream (received, e.g., from a TV channel selection) that s/he wants to be replaced. The user may also select which object shall be visualized instead of the original object.
      - A 3D-model of the new object is determined with an appearance built from images of the original object taken from different views.
      - The 3D-model is adapted to the original model (lip position, emotional state, gazing direction, etc.) and replaces the original face.
   Merging of objects can be conducted, e.g., as follows:
      - Replacing a person's face on a news video stream is achieved by extracting the face's contour, lip position and if applicable other features (e.g., an emotional state derived from the face image and/or from a voice content). A 3D-model of the original person is then deformed according to this input so that the finalized object can be used to replace the original content. The object to be replaced can be of a different quality, in particular of a higher quality as the original content. In particular, such object can be filtered for such purpose.
      - A person's face shown on the news can be replaced by an artificial or synthetic object or creature (e.g., by a computer-animated object). Advantageously, such models can be provided and processed with less computation effort than models based on real peoples' image data.
b. Stretching:
   Said "Stretching" capability corresponds to a transformation of a feature on a video so that the same feature appears extended or compressed thereafter. This is only an example of a set of operations that may be performed on a set of objects (scaling, skewing, etc.).
   For example, the user may want to stretch a face in a vertical and/or in a horizontal direction. This may be achieved as follows:
      - The user selects the feature (from a set of available features, obtained, e.g., from face detection) on a video stream (received, e.g., from a TV channel selection) that s/he wants to be replaced;
      - A 2D-model of the selected feature is built, and extended;
      - The 2D-model is scaled according to the user's input and hence used to replace the original face.
c. User Content Transformation in addition with personal video recording (PVR):
   This use case allows recording of a modified video stream as shown in **Fig.2****.**
   For example, a child is enabled to record a cartoon with the child's face merged into the cartoon instead of the cartoon character's face. The video stream can be simultaneously viewed by the child while being recorded or it can be watched at a later time.
   Fig.2 corresponds to the exemplary implementation for a content merging and/or content transformation system according to Fig.1 supplemented by an operator billing center 201.
   In a message 210, IPTV electronic programming guide (EPG) data is conveyed from the middleware 105 towards the user at the home network 101. Content, e.g., programs or channels are streamed in a message flow 219 from the TV-broadcast head end 106 to the content transformation server 104.
   The user may select a program to be recorded from the EPG data provided (see step 211).
   According to the program selected, the user at the home network 101 is provided with a selection menu from the content transformation server 104. The user may configure templates and return such information to the content transformation server 104 (see messages and configuration 212).
   The user triggers an HTTP-record request comprising, e.g., a MAC address, a program, a date and/or a time information to the middleware 105 and obtains an HTTP confirmation from said middleware 105 (see messages 213).
   As the content transformation server 104 has been provided with template information, the modified content is streamed from the content transformation server 104 to the VoD content server 107. The middleware 105 provides record information (program, date and/or time) to the VoD content server 107, wherein said VoD content server 107 records the program and thereinafter provides a confirmation message ("Record OK") to the middleware (see messages and record 220).
   The user may add an icon in the EPG and browse the EPG guide or a folder comprising the recorded entries and s/he may select a program as recorded (see step 214).
   The user may send a Real-Time Streaming Protocol (RTSP) DESCRIBE message to the VoD content server 107 and s/he may obtain in return a RTSP Response comprising a server type and content coding details (see messages 215).
   The user can then send a RTSP SETUP message as well as a RTSP PLAY message to the VoD content server 107. The VoD content server 107 in return performs a database update at the content transformation server 104 via an HTTP request and receives an HTTP acknowledge message in return. Then, the VoD content server 107 sends a RTSP RESPONSE OK message towards the home network 101 to the user (see messages 216).
   The transformed and recorded video is streamed (see message flow 217) to the user by the VoD content server 107.
   Preferably, statistic data regarding the user's access to his or her personal video recorder is sent to the middleware 105. The operator billing center may regularly request such data via a file transfer protocol (FTP) for billing purposes regarding the services provided to this particular user (see messages 218).
   Hence, according to Fig.2, the user is enabled to record a modified content. The user selects video data (IPTV channel) from EPG data provided. The video selected is transferred from the TV broadcast head end 106 to the content transformation server 104. At the front-end, the user may select the movie features or objects s/he wants to transform and/or a time (e.g., start and end time) for such transformation to take place. The video is then transformed so that the selected movie objects are replaced by at least one template that has preferably been selected in advance by the user. The transformed video is streamed to the user and/or simultaneously stored at the VoD content server 107.
d. "karaoke":
   Karaoke refers to a performance of a person who tries to mimic a singer or an (movie) actor in order to match his or her voice as good as possible.
   Movieoke is another form of entertainment in which a person performs along with an actor, preferably in front of a video-projection of a movie. An objective of movieoke is to match the gestures of the movie actor.
   Next Generation Karaoke comprises mimicking both voice and gestures (at least face appearance and expression, as well as lip gestures and eye direction). This can be accomplished by merging the performer's image in the movie (instead of in front of said movie).
   Visual performance can be automatically evaluated by estimation of a difference between the positions of the new performer (user) and the actor in the original content.
   A level of difficulty can be set for such mimicry (e.g., by selection via a scrollbar) providing a measure for a difference between the performances of the user and the underlying movie actor. For example, the user's video can be projected over original video (high level of difficulty), the user's face or body can be projected over and compared to the original actor's face (medium level of difficulty) or a 3D-model of the user's face can be built and projected to the original video instead of the original actor's face (easy level of difficulty).
   Hence, video-clips for such next generation karaoke can be sold and/or provided by operators, preferably with the video being already prepared for customization of the objects to be mimicked.
   According to **Fig.3**, a next generation karaoke application is depicted from a functional perspective. A movie or a video-clip, is pre-modified so that a specific set of objects or features (e.g., faces) have been identified and are ready to be replaced, e.g., with the user's face. Said user may mimic an actor's voice, appearance, facial gestures and/or expression.
   A video of the user's face (or his or her body) may be extracted and mapped into the movie or the video clip.
      It is, however, also possible to build a 3D-model of the user (e.g., his/her face) by a set of images recorded and project such 3D-model into the movie or the video clip.
e. Gaming:
   Another application or use case corresponds to gaming.
      E.g., for networked games, console games, PC games, etc., this approach can be used to personalize a video game in a similar way as described above. For instance, a hero's face in a game can be replaced by the user's face.
   This allows a high degree of personalization as a user can, e.g., allocate faces of known people to (artificial) characters in a computer game.
f. Exploration of new tagging mechanisms:
   With current and in particular upcoming versions of the MPEG standard, e.g., MPEG-4 or MPEG-7, images on a video can be decomposed as (already) tagged objects.
   Such tagged objects can be utilized for extraction and/or transformation purposes as described herein.
      Advantageously, for such tagged objects extensive detection and tracking of objects is not required.
   For example, a content production studio (or a movie studio) may provide (by producing, editing) content containing tagged objects.
   In such scenario, the user may select an object to be replaced, said object being already identified within the stream (e.g., tagged within the MPEG-4 video stream). Such approach may be capable of running on less complex hardware.
g. Personal settings
   The user individually configures a content merging and/or transformation solution in order to, e.g., replace for a given time all faces with given templates or categories of faces.
   As an alternative, a once set configuration for a particular show, channel or program may be repeatedly applied, e.g., same time each day.
   For example, additional face recognition could be applied for an image of a stream comprising several faces. A user may define faces to be replaced in advance and the recognition portion detects such faces and replaces each face detected with a template face stored.
   Known face recognition techniques could be used utilizing, e.g., face templates, models of faces, etc.

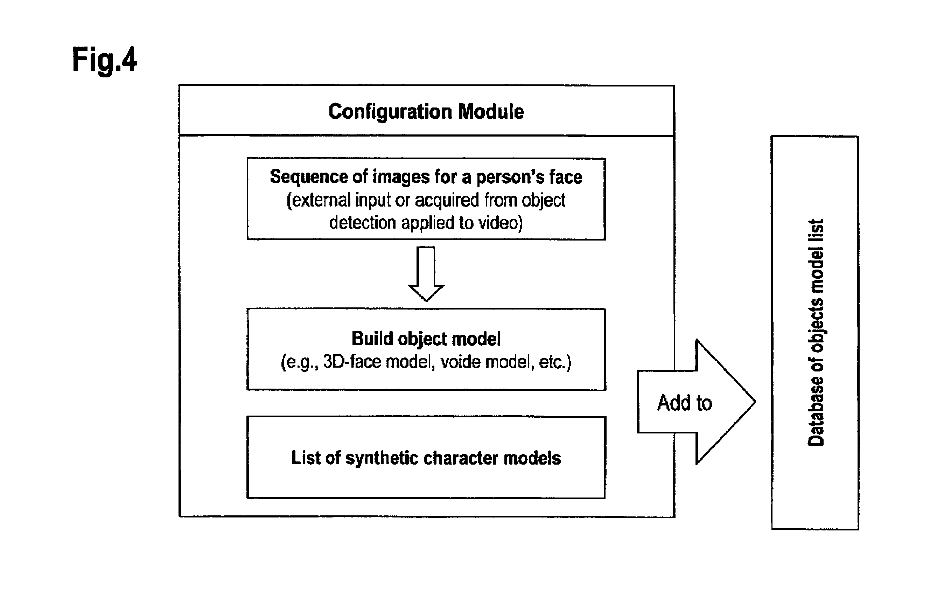

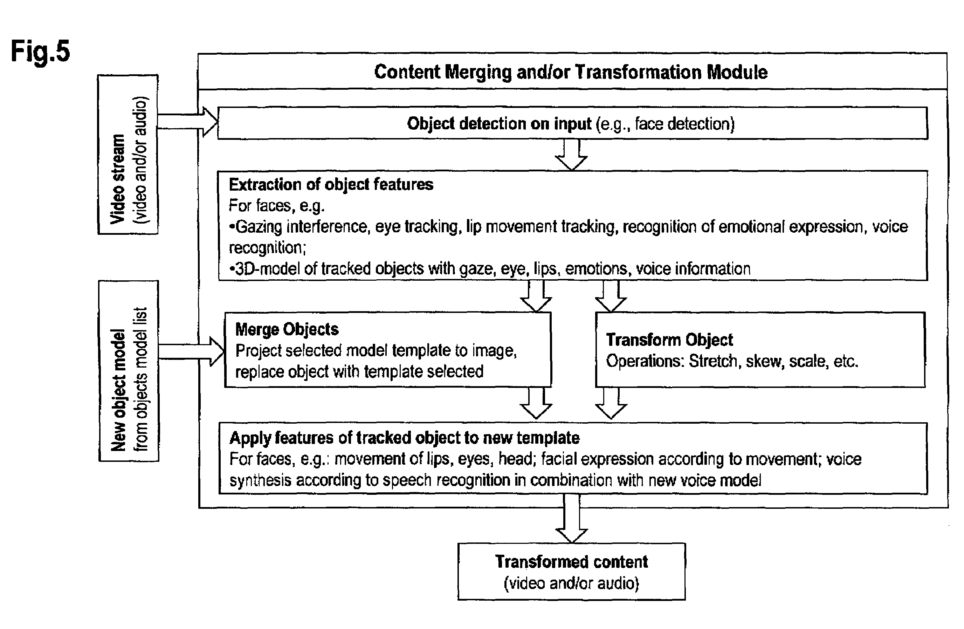

The approach provided in particular suggests means to transform content. This may be achieved by utilization of a network mechanism for content personalization and transformation, comprising:
(a) a client interface module comprising a configuration module as shown in **Fig.4**.
   This configuration module builds an object model from a sequence of images or it may provide a synthetic or artificial model (or other models downloaded) which is added to a database of object models (an object may comprise a face, an advertisement, a car, etc.).
   The model can be a complex model comprising, e.g., 3D geometry and appearance, lip model, eye model, voice model for speech synthesis, etc.
   The client interface allows the user to create, modify and select object models to be used.
(b) a content merging and/or transformation module, comprising several components as shown in **Fig.5****:**
   - An object detection component is used to extract objects from a sequence of images, which may be selected by the user to be replaced by other objects or transformed into a different appearance;
   - An extraction of object features component to extract additional information regarding the object;
   - A merge objects component replaces the original object by a projection of the object model created.
   - A transform object component performs at least one operation on an existing object or feature identified, e.g., stretching, skewing, scaling. The transform object component may modify the object instead of replacing it.
   - A further component applies features of the tracked or identified object to the new or amended object, so that the latter object can be visualized similar to the original object.
   The object may be tracked on the video so that the new object can be utilized to replace the original object in all frames. If the object disappears from the video, it may still be replaced on future images whenever it reappears.
(c) an optional client module, depending on whether the solution provided is either network-driven or home-centered.
   Networked solutions may be preferred to interact with client hardware of limited performance such as set-top boxes (STBs). In such case, a component that requires high processing performance, e.g., the merge module, may advantageously be deployed with the network on an operator's backend infrastructure.
   For such network-type solution, a client impersonate module may provide an interface that enables the configuration and/or selection of objects that are stored and managed beyond the home platform. Such (predefined or pre-configured) objects may even be shared by several users.

### Network Embodiments

The content merging and/or transformation system may be located within the network, e.g., on a server within the network, or it may be deployed with a home platform such as the STB. In addition, it may be distributed among the home platform and the network.

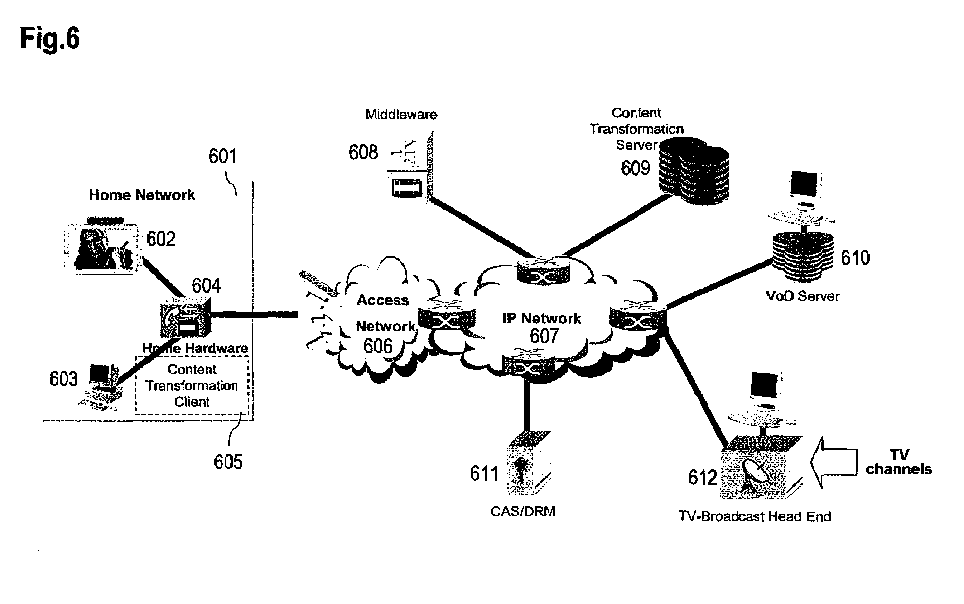

**Fig.6** shows a general architecture comprising a home network 601 with a STB/TV 602, a PC 603, which are both connected to a home hardware 604 that may comprise (at least a portion of) a content transformation client 605. The home hardware is connected to an access network 606 that is further connected to an IP network 607. To the IP network are connected a middleware component 608, a content transformation server 609, a VoD server 610, a digital rights management component 611 and a TV-broadcast head end 612 to which at least one TV channel is fed.

The content merging and/or transformation system may comprise a home component and a network component. It may also be completely located on a network server or on a home platform (such as a STB).

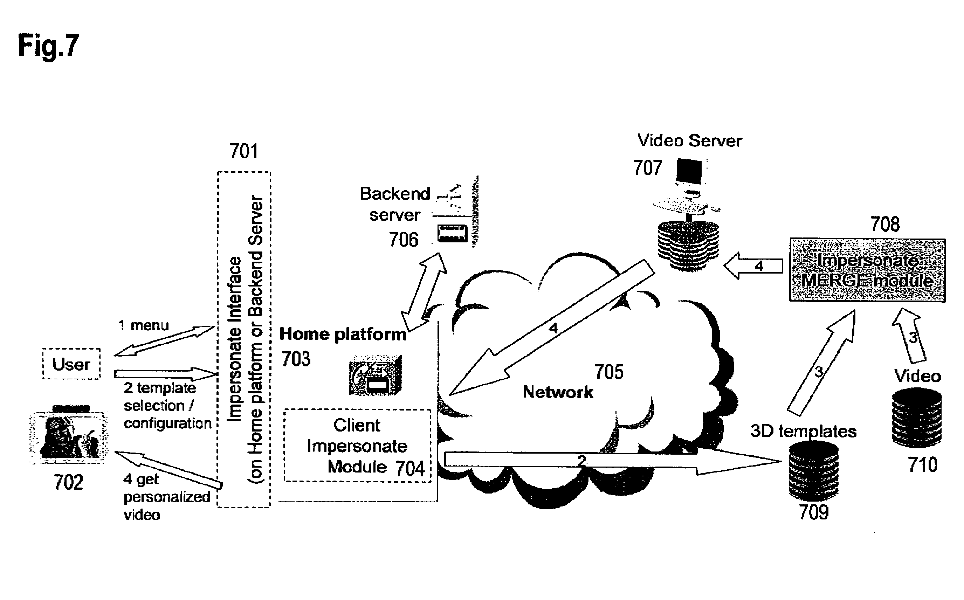

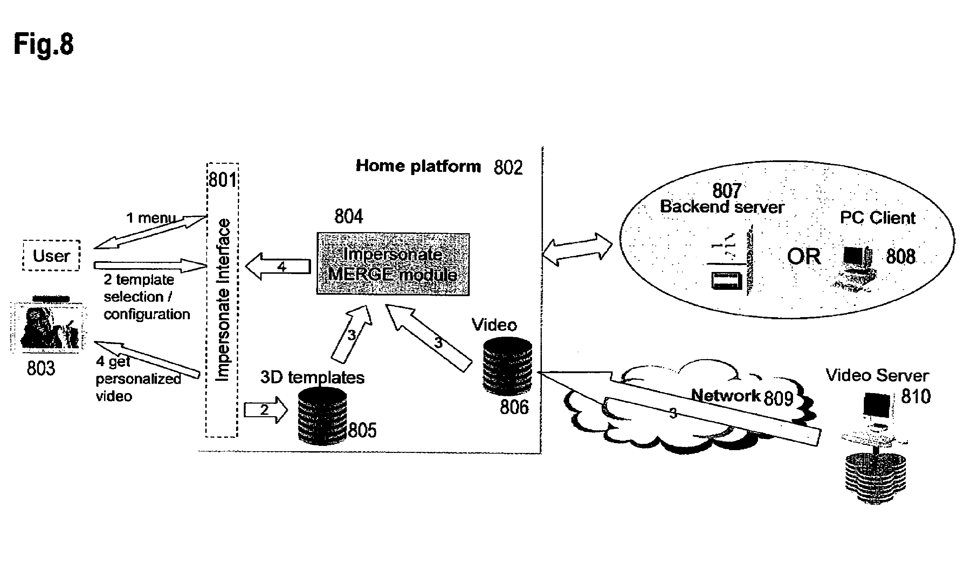

Hence, in particular two scenarios may be applicable:
a. Network deployed scenario (see **Fig.7**):
   Fig.7 depicts a network "impersonate solution" comprising an impersonate interface 701 to which a user is connected via a STB/TV 702. The impersonate interface is associated or located with a home platform 703, which further comprises a client impersonate module 704. The home platform 703 is connected to a network 705, to which a backend server 706, a video server 707, a 3D-templates database 709 and a video templates database 710 are connected or provided, Preferably, an impersonate merge module 708 is deployed with an operator.
   Hence, according to Fig.7, the content merging and/or transformation module 708 is completely located on the network side, e.g., on a server of the network. The communication flow depicted in Fig.7 can be described as follows :
      (1) The user via STB/TV 702 accesses the impersonate interface 701 (front-end);
      (2) The user selects or configures object templates via said impersonate interface 701; as the object templates are stored with the network, the client impersonate module 704 may only have to provide the necessary interface;
      (3) Video templates 710 and 3D-templates 709 are merged, so that video objects of an original video content may be replaced or amended accordingly; it is noted that for stretching of the object, said 3D-templates may not be necessary;
      (4) The modified video content provided by the impersonate merge module 708 is stored on the video server 707 and/or streamed towards the home platform 703 to the user.
   The approach provided in Fig.7 may be preferred from an operator's perspective as it works with low performance (and thus cheaper) home hardware, and the service provided lies within the premises of the operator thereby making it more difficult for a deceptive user to access the service without authorization.
b. Client deployed scenario (**Fig.8**):
   Fig.8 depicts a client "impersonate solution" comprising an impersonate interface 801 within a home platform 802 to which a user is connected via a STB/TV 803.
   The home platform 802 further comprises an impersonate merge module 804, 3D-templates 805 and video templates 806.
   The home platform 802 is connected to a backend server 807 and/or to a PC client 808.
   Furthermore, a video server 810 provides data via a network 809 to the home platform 802.
   Fig.8 shows the content merging and/or transformation module being completely located on the home platform 802.
   The communication flow depicted in Fig.8 can be described as follows:
      (1) Via the STB/TV 803 the user accesses the impersonate interface 801;
      (2) The user selects or configures 3D-templates 805 (object templates) via said impersonate interface 801;
      (3) A video stream provided via the video templates 806 by the video server 810 is merged with the 3D-templates 805 on the home platform 802 so that video objects or video features are replaced accordingly; it is noted that for stretching of the object, said 3D-templates may not be necessary;
      (4) The modified video is sent to the user's STB/TV 803; the modified video can also be stored with the home-platform 802 or on the video server 810.
   This type of solution is advantageously utilized in case the home platform 802 (STB, PC-client, etc.) provides sufficient processing performance for supporting said transformation and/or replacement functionality.
   For some applications, e.g., for future video coding formats or next generation karaoke (see above), even a limited processing power on the home platform may suffice and hence the scenario according to Fig.8 may be applicable.

### Further Implementations

One exemplary implementation suggested refers to adding at least one parameter to a video stream in order to tag the video stream as "transformable".

The mechanism may then advantageously be applied to compatible (i.e. transformable) video streams, and to transformable objects within each image of such video stream.

### Active Object Detection

Object detection may be applied to all object categories that are represented by an object database. If necessary, object detection and object recognition can be applied not only to detect an object but also to recognize its category (e.g., a generic object detection algorithm may be able to detect a car, but an additional algorithm may have to be applied to recognize a type of such car).

In another component ("extraction of object features", see Fig.5) additional information regarding the object can be extracted. The object can also tracked in the video for a certain time period, so that the new object can replace the original in all frames (i.e. single images of a video content). If the video object disappears from the image, it will still be replaced whenever it reappears on an image.

### Passive Object Detection

Most of the video-streams of interest, such as movies, advertisements, etc., are produced in studios. Some movies, e.g., include special effect scenes in which objects are carefully merged into a scene in order to create, e.g., "physically impossible" actions (this artificial merge is somehow an opposite step of object segmentation in active object detection).

Hence, using video coding formats like MPEG-4 or MPEG-7, content producers and advertisers have all the prerequisites to tag objects in images, so that no active object detection and recognition schemes may be necessary due to object-related encoding of a video stream.

Passive detection hence efficiently utilizes previously (e.g., during encoding) tagged objects in a video stream.

Advantageously, such passive detection may utilize a protocol for tagging/tagged objects (regarding, e.g., object scale, orientation, etc.) in order to extract objects efficiently. In such a way, a 3D-model of the replacing object can be transformed according to the parameters regarding the object to be replaced, said parameters being conveyed with the original stream.

### Active and Passive Object Detection

Accordingly, both mechanisms, i.e. active object detection and passive object detection may be used in combination with one another.

In particular, active object detection can be utilized at the video content production source in order to create object parameters (e.g., object segmentation with location and contours, object orientation). The video can then be transformed at a later stage passively using such object parameters.

For example, producing and broadcasting a life event may have to use active detection techniques at the encoder, because advanced planning of such video stream well before it being broadcast is not possible in such a live scenario.

### Object Parameters

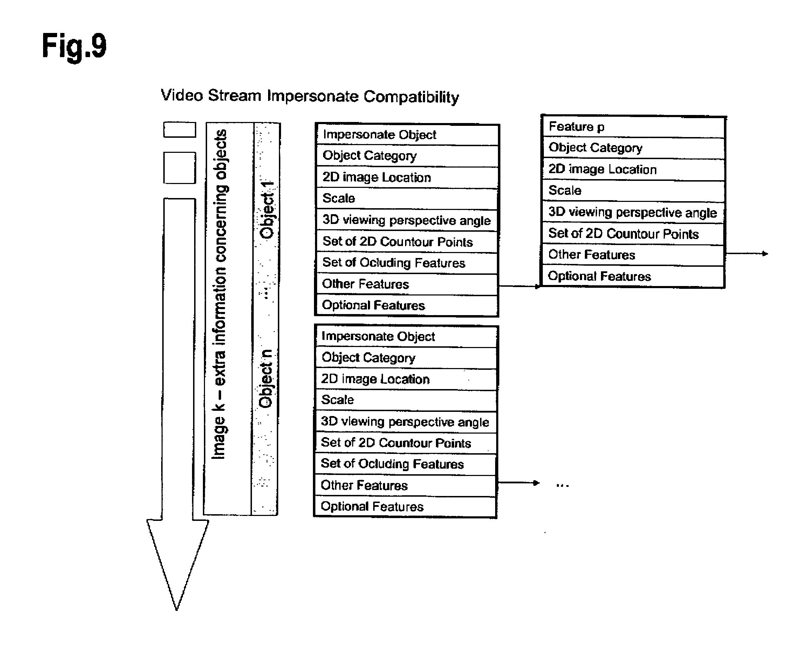

An exemplary protocol for transmitting an object parameter structure is depicted in **Fig.9**.

Per video stream an "impersonate compatibility" parameter is used to tag a video stream as transformable or not. Per object, a set of parameters is provided for tagging the object, including optional features.

Exemplary parameters, their possible values and an according description are provided hereinafter.

| | |
|---|---|
| Parameter: | Impersonate Object |
| Value: | ID |

### Description:

Impersonate object means that the object can be transformed into an equivalent one:
- In case of active object detection, an object detection mechanism is available for that class of objects, and that the output of the object detection algorithm provided a reliable result.
- In case of passive object detection, this object is tagged as transformable, and hence it will be available and/or accessible to the user interface for the user to select and change its appearance. Objects that are not tagged may preferably as such not displayed to the user, thereby making them inaccessible for the user for transformation and/or replacement purposes.
An identity ID of, e.g., "0" or "-1" may indicate whether or not an object is transformable.

| | |
|---|---|
| Parameter: | Object Category |
| Value: | Name |

### Description:

The category name specifies the class of objects into which an object may be transformed.

For example, a face can be transformed into another face, but is cannot be transformed into an object belonging to a car category.
- In case of active object detection, the category name assigned to an object corresponds to the class assigned or provided by an object recognition mechanism.
- In case of passive object detection, the category name is introduced by the content producer or by any other encoding entity.
Depending on the actual content, the scope of the class may be restricted in various ways. For instance, if only a white person's face appears, the content producer may tag it to a face class (generic scope). But if the person's skin is visible in greater detail, the content producer may further classify the object as a "white face", narrowing the set of transformable objects into faces with white skin-color.

| | |
|---|---|
| Parameter: | 2D image location |
| Value: | (x,y) |

### Description:

A location provided by two dimensional coordinates of the center of mass of the object template.

| | |
|---|---|
| Parameter: | Scale |
| Value: | Real value s |

### Description:

Indicates a scaling factor (in pixels) from which a real object appears downsized.

For virtual objects, a reference measure can be used.
Such reference may be applied for all virtual objects created.

The scale value may be determined by a ratio between the object distance to the camera's focal center and the distance between the camera projection plane and the focal center.

| | |
|---|---|
| Parameter: | 3D viewing perspective angle |
| Value: | (ρ,φ,θ) |

### Description:

This parameter refers to a 3D-orientation of the object.
Relative to a reference, it is indicated to what extent a 3D-model is rotated along roll, pitch and yaw angles in order to be projected into the image replacing another object appearing at the same orientation.

A reference value (0°, 0°, 0°) can be set to a front view of the object. A transformed object can then projected into the image accordingly.

| | |
|---|---|
| Parameter: | Set of 2D contour points |
| Value: | Collection of pairs of points which define the boundaries of an object. ((x1,y1),..., (xn,yn)) |

### Description:

This is an object template provided by a set of 2D contour points. A repetition of a point may indicate that the contour is closed. A following point indicates a starting point of a next contour. Contour points may be sorted in a clockwise direction so that points to the contour's right hand side are inside of the object.

| | |
|---|---|
| Parameter: | Set of occluding features |
| Value: | (name 1, ..., name n) |

### Description:

This parameter indicates which objects are at least partially occluding the current object.

| | |
|---|---|
| Parameter: | Other Features |
| Value: | Structure (see previous figure) |

### Description:

This parameter is used to tag complex objects, i.e., objects comprising various features (e.g., wheels of a car).

| | |
|---|---|
| Parameter: | Optional Features |
| Value: | Any kind of values |

### Description:

This parameter comprises a field to indicate additional parameters that may be used to optimize the transformation. Such additional parameters may be:
- Color
- Information required to make two different classes compatible with one another, e.g.:
   - How to deform one class into the other;
   - How to scale up or down compatible classes of real objects, but of different dimensions (e.g., real sport cars and miniature sport cars);
- Additional transformations (e.g., black windows on cars).
   Optional features are not required, but in case such features can be provided it may be helpful to support the transformation and/or merging process.

### Compatible Category Classes

The approach presented herein does not only allow an object to be replaced by at least one object of the same category or class. In addition, transformation may be realized between compatible classes. Such extension can be provided, e.g., as follows:
a. An internet server may process requests concerning a compatibility of two object classes, or it may provide classes or objects that are compatible with one particular object or class.
b. A "compatible categories" parameter can be added to the protocol that contains a list of compatible classes to the actual object or class given by the object category parameter.

Preferably, compatible classes comprise objects of similar categories (e.g., cars) and advantageously of similar geometry. Similar size is not a necessary requirement, but without information regarding the size additional information (that may be introduced by said optional features) may be needed in order to correctly determine the scaling factor.

### Object Transformation

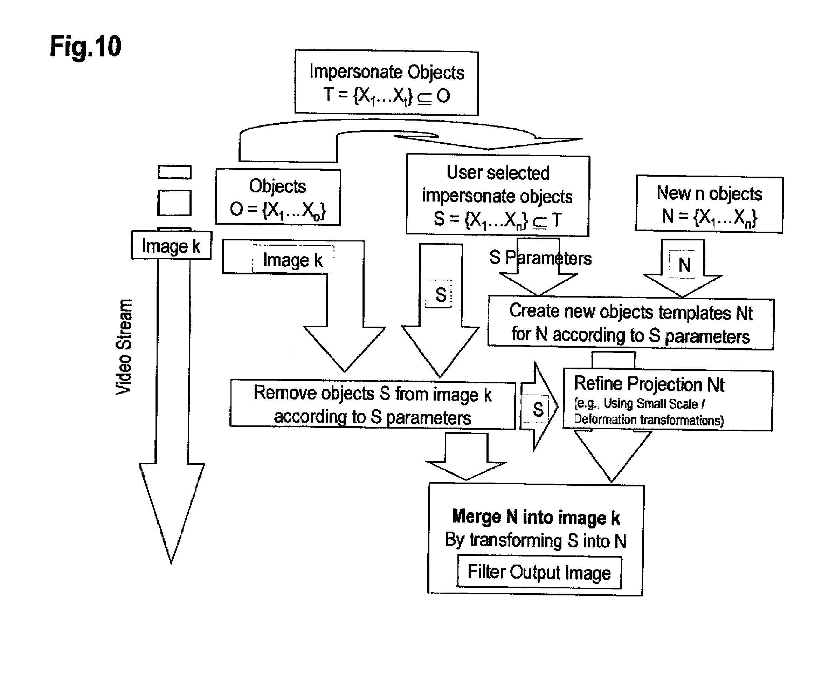

After the user has selected at least one object and after the image detection has been conducted, objects may be manipulated in particular as shown in **Fig.10****.**

For each image k of a video stream, the set of objects O is identified during detection, assigning a class to each object, in particular according to one of the following methods:
- A class is actively assigned to an object by object detection mechanisms. The set of objects O is obtained by applying an object Dk detection algorithm (if available) for each object Dk in the database.
- A class is passively assigned to an object by extracting the object classes from the encoded video objects tags. Hence, the set of objects O corresponds to all tagged objects for a given image.

From this set of objects O, a subset T, i.e. the set of impersonate (transformable) objects, is determined as described above.

The user may select one object or more objects S to be transformed, wherein S is a subset of the subset T.

For example, the user may freeze an image k, wherein for such image k a user-interface visualizes all transformable objects T. Upon selection of a subset of n objects, the user may select a group of N new objects from a group of available 3D-models of objects.

According to the selection of S objects within the image k, the templates of said S objects are removed from the image k.

New image templates Nt are created by projecting N new objects to the image coordinates according to a perspective transformation given by the parameters of the S objects to be replaced.

Hence, a template N1 is projected instead of the original object S1, and so forth. Finally, Nn is projected instead of the original object Sn.

The projection is refined regarding a tolerance margin (of, e.g., 5%) so that all image pixels are filled and the contours of the templates or objects inserted do not significantly differ (e.g., not more than a predefined tolerance factor) from original objects' contours. If such filling cannot be processed meeting the required tolerances, the transformation may be cancelled for a particular object affected.

Small transformations, such as small scaling and/or deformations can be applied within small tolerance margins in order to optimize the fit of the new object's Nt contours to the old ones.

Filtering may be applied to pixels or points or clusters in the image that are in a vicinity of a transformed object contour in order to smoothen edges.

### Compact Representations

Video compression methods (like MPEG-2 or H.264) exploit dependencies between subsequent pictures. The change from one picture to the next picture is predicted and the prediction error is encoded. To allow random access, this prediction chain is subdivided into regular intervals to which so-called key pictures (or key frames or I-frames) are inserted. Said key pictures are pictures that are not based on predicted information so that they can be decoded independently from other (preceding) pictures.

The approach presented herein also copes with such predictive coding by, e.g., transmitting update information regarding objects, preferably moving objects between said key frames as there may be no additional information for non-moving objects transmitted between such key frames. Parameters as how to transform objects could be grouped into the video codification scheme.

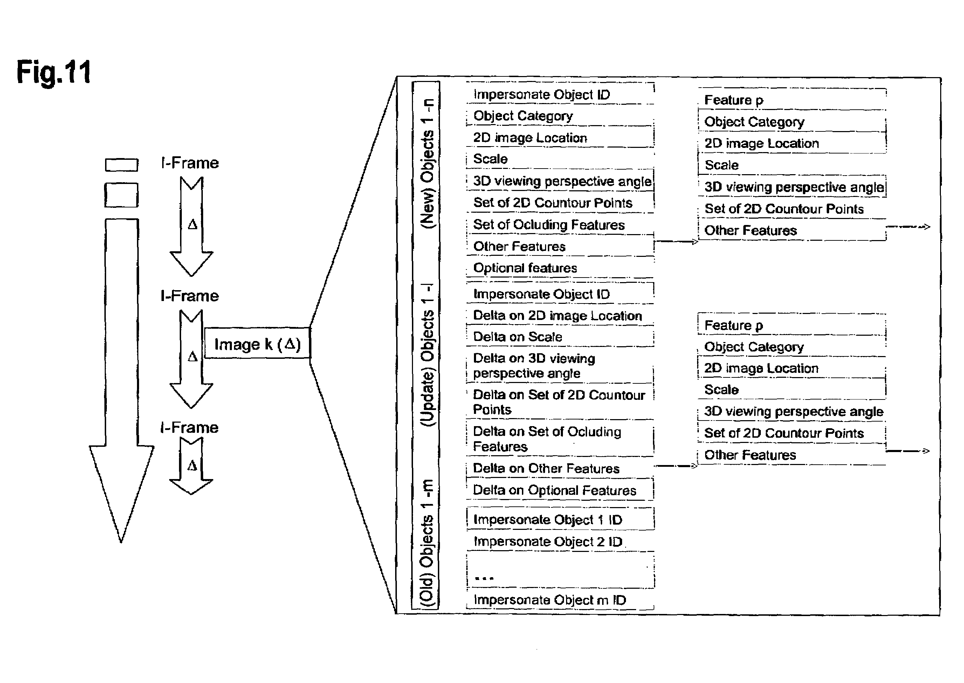

**Fig.11** shows an implementation of a compact representation utilizing predictive coding. An old object is an object that is no longer within the image. Whenever a new object is detected within an image, all parameters for such new object are sent on the video stream (similar as for the key frame). For other objects (neither old nor new), only the information differences are conveyed within the video stream.

### Further Advantages

This approach enables an object based network mechanism to transform video content as chosen or selected by a user. The user can in particular select transformable objects within a video content (e.g., video broadcast, VoD, TV-broadcast) and configure a type of transformation, which may comprise a replacement of at least one object by at least one other object or changing a shape of (or transforming) an existing object. The at least one other object to be selected by the user is advantageously provided by a database as a template, which may be hierarchically structured (car - wheels - interior - seat - motor, etc.) and/or modeled. Such templates may comprise video as well as audio content.

If, e.g., a person (or a portion thereof like his or her face) in a video content is identified, the person can be replaced by a video template showing a different person or an artificial person (e.g., a drawing) as well as by an audio template replacing the voice of said original person. Each template, video or audio, may be provided as a model that can be rather simple or very complex (e.g., to adequately model a car, a plurality of aspects may have to be considered, e.g.: a shape of the car from different perspectives regarding its interior as well as its exterior together with the sound the car makes when driving at different speeds in various gears on different roads, e.g., wet or dry roads).

Advantageously, the objects provided are structured or parameterized. Hence, this approach suggest an exemplary way to parameterize an object within a video and/or audio content.

It is another advantage to tag a video content or stream as transformable or as non-transformable.

Objects that are tagged as transformable ("impersonate") can be further structured by parameters that enable an efficient object transformation.

Additional information provided in the video content may regard not only to the image itself, but also to information as how at least one object within an image can be transformed (rules of transformation).

Further, the approach provided allows an application service provider (ASP) to offer a new category of service, in particular the user can be allowed to manipulate contents in various ways.

Additionally, new business models are provided based on user content generation, since transformed content is as such new content that can be sold as well by the application service provider (ASP) to other users. ASPs may charge users to view such content and give credits or a proportion of the profit to users that created such content.

### Abbreviations:

- 2D: Two-dimensional
- 3D: Three-dimensional
- ASP: Application Service Provider
- CMS: Content Management System
- EPG: Electronic Program Guide
- IPTV: Internet Protocol TV
- STB: Set-Top-Box
- VoD: Video on Demand

## Claims

1. A method for processing a data stream comprising the steps:
(a) identify at least one object within said data stream;
(b) transform said at least one object within said stream.

2. The method according to claim 1, wherein said data stream is provided in or via a network.

3. The method according to any of the preceding claims, wherein said data stream comprises video content and/or audio content.

4. The method according to any of the preceding claims, wherein prior to step (b) the at least one object is extracted.

5. The method according to any of the preceding claims, wherein the at least one object is transformed by being replaced by at least one predefined object.

6. The method according to claim 5, wherein said at least one predefined object is selected by a user.

7. The method according to any of claims 5 or 6, wherein said at least one predefined object comprises at least one 2D-model and/or at least one 3D-model.

8. The method according to any of claims 5 to 7, wherein said at least one predefined object is provided by a object database.

9. The method according to any of the preceding claims, wherein transformation of the at least one object comprises:
- stretching and/or skewing and/or scaling of the at least one object or a portion thereof;
- impersonating of the at least one object or a portion thereof.

10. The method according to any of the preceding claims, wherein at least one object is represented or comprises at least one of the following parameters, in particular provided as a parameter for the object:
- Information regarding as how the object may be transformed within the data stream or within an image of said data stream;
- Information regarding whether or not the object is transformable;
- Information regarding possibilities of transforming and/or replacing the object if such object is regarded transformable;
- Information regarding a category of objects, wherein each category provides similar or identical properties to objects associated with said category;
- Information regarding a location of the object, in particular coordinates;
- Information regarding a scaling factor and/or a 3D-orientation of the object;
- Information regarding a contour of the object, in particular a set of 2D-contour points;
- Information regarding occluding objects.

11. The method according to any of the preceding claims, wherein said method is at least partially provided at a customer's premises, in particular in a set-top box.

12. The method according to any of the preceding claims, wherein said method is at least partially provided by a network, in particular by at least one network component.

13. The method according to any of the preceding claims, wherein the at least one object within said data stream is identified by active object detection and/or by tracking mechanisms.

14. The method according to any of the preceding claims, wherein the at least one object within said data stream is identified by the data stream.

15. The method according to claim 14, wherein said data stream is a data stream comprising object information, in particular an MPEG data stream.

16. A device for processing a data stream comprising a processor unit and/or a hard-wired circuit and/or a logic circuit that is arranged such that the method according of any of the preceding claims is executable thereon.

17. The device according to claim 16, wherein said device is associated with or deployed at a customer's premises.

18. The device according to claim 17, wherein said device is a set-top box.

19. The device according to claim 16, wherein said device is a network component within a communication network.

20. System comprising the device according to any of claims 16 to 19.
